(19) Europäisches Patentamt
European Patent Office
Office européen des brevets

(11) EP 0 515 062 B1

(12) **EUROPEAN PATENT SPECIFICATION**

(45) Date of publication and mention
of the grant of the patent:
**02.01.1997 Bulletin 1997/01**

(51) Int Cl.6: **C07G 17/00**, C10M 159/24

(21) Application number: **92304138.8**

(22) Date of filing: **08.05.1992**

(54) **Process for overbased calcium sulfonate**

Verfahren zur Herstellung von überbasischen Calciumsulfonat

Procédé pour la préparation de sulfonate de calcium surbasique

(84) Designated Contracting States:
**BE DE ES FR GB IT**

(30) Priority: **23.05.1991 US 705061**

(43) Date of publication of application:
**25.11.1992 Bulletin 1992/48**

(73) Proprietor: **ETHYL PETROLEUM ADDITIVES, INC.**
**Richmond, Virginia 23219-4304 (US)**

(72) Inventors:
• **Harris, Peggy Jo**
**Belleville, Illinois 62223 (US)**
• **Schultz, Thomas Eugene**
**Cahokia, Illinois 62206 (US)**

• **Goldschmidt, Mark Allan**
**Granite City, Illinois 62040 (US)**
• **Griffin, Paul Gaynor**
**Collinsville, Illinois 62234 (US)**

(74) Representative: **Woods, Geoffrey Corlett et al**
**J.A. KEMP & CO.**
**14 South Square**
**Gray's Inn**
**London WC1R 5LX (GB)**

(56) References cited:
EP-A- 0 000 264     EP-A- 0 385 616
US-A- 3 609 076     US-A- 5 011 618

## Description

This invention relates to an improved process for preparing overbased calcium sulfonates useful as lubrication oil additives.

Overbased calcium sulfonates are added to lubrication oils to neutralize oil degradation products. Oil degradation products produced in the course of operation of internal combustion engines may be corrosive to internal engine parts, unless neutralized. Such corrosive oil degradation products not only attack and/or corrode engine parts, but they can catalyze the formation of sludge, thereby reducing the lubricity of the lubrication oil, resulting in an acceleration of the wear of moving parts in contact with the oil.

To counteract the corrosive and catalytic effects of degraded lubricant oil, substances are added to oils which neutralize acids as they are formed in the engines. Adding alkalinity agents to motor oil detergents for this purpose is known as overbasing. Of the overbasing agents, the colloidal carbonates of alkaline earth metals have been found to be well suited for this purpose. To stabilize the colloidal carbonate dispersions, oil soluble surface active agents such as sulfonates of the alkaline earth metals are used. The sulfonic acid portion of the sulfonate molecule typically has a molecular weight of 450 to 600. Sulfonates are made by the sulfonation of alkyl benzenes having the desired molecular weight. Particularly effective are the benzene alkylates having straight chain alkyl groups.

The alkalinity of overbased petroleum sulfonates is generally determined by titration and is expressed as titratable base number (TBN), equivalent to the milligrams KOH per gram of sample. Overbased alkalinities generally range from 0-400 TBN, representing 0-50 wt. % as CaO, $Ca(OH)_2$, or $CaCO_3$, typically suspended or complexed with 10-40 wt. % petroleum sulfonate. Once formed, the overbased sulfonates are filtered to remove particulates so as to give optically clear products.

U.S. 3,256,186 discloses a process for preparing basic metal compositions from bright stock sulfonic acids in which a mixture of an oil-soluble sulfonic acid or carboxylic acid, alcohol, inorganic halide, and alkaline earth metal base is carbonated at a temperature from 25 °C. to the boiling point of the mixture. In U.S. 3,320,162, a process is disclosed for increasing the base number of a calcium petroleum sulfonate by contacting the sulfonate with a calcium compound, an ammonium compound, and methanol and heating the resulting mixture. U.S. 3,384,585 relates to an improved process for preparing overbased metal petroleum sulfonates, which comprises contacting an acidic gas with a slurry of metal petroleum sulfonate, metal hydroxide or metal oxide, alcohol, and diluent. The conditions of gas phase contact are controlled in order to obtain a desired amount of increase in alkaline reserve. Another process for overbased calcium sulfonates is disclosed in U.S. 4,086,170 wherein an alkylbenzenesulfonic acid is treated with a type of CaO having a medium reactivity toward water while adding ammonia and carbon dioxide to the mixture. In yet another process, U.S. 4,604,219, an overbased calcium sulfonate is prepared by forming calcium hydroxide in situ by the continuous and uniform addition of water to calcium oxide over the entire hydration and carbonation time. In U. S. 4,780,224, a process for preparing overbased calcium sulfonates is disclosed wherein a neutral calcium sulfonate is diluted with a light hydrocarbon solvent and a lower alkanol, calcium oxide is added and the resulting mixture is heated to 100°F to 170°F, then a portion of water is added followed by carbon dioxide and additional water in order to form an overbased calcium sulfonate product. U. S. 4,995,993 describes a process for preparing a highly overbased sulfonate detergent additive in the 300-500 TBN range by selectively removing water from the reaction system prior to completion of the carbon dioxide addition. In yet another process, U.S. 4,997,584, calcium sulfonate having a TBN of 500 is prepared by reacting CaO, $Ca(OH)_2$ and $H_2O$ with synthetic and natural sulfonates in certain molar ratios for a sufficient amount of time to form the overbased calcium sulfonates.

Previously when attempts have been made to utilize lower cost, high reactivity lime for preparing overbased sulfonate products, the products thus produced generally suffered from high turbidity and/or poor product filtration rates.

The present invention provides a process for preparing an overbased calcium sulfonate product having improved filterability and a titratable base number (TBN) of greater than about 300 comprising forming, in a reaction vessel, a reaction mass comprising solvent, lower-alkyl alcohol, high reactivity lime (calcium oxide) having a total reaction period not exceeding 10 minutes as determined by the method of ASTM-C 110-67, water, hard base, and alkylbenzene sulfonic acid; carbonating said reaction mass at a temperature which is sufficient to form said overbased calcium sulfonate product having a filtration rate of more than about 2 mL per minute as measured by the method described herein; and separating from the reaction mass the overbased calcium sulfonate having a titratable base number (TBN) greater than about 300.

The term calcium sulfonate as used herein, refers to those sulfonates wherein the hydrocarbon portion of the molecule has a number average molecular weight in the range of from 400 to 3000 or higher. These oil-soluble sulfonates can be either natural sulfonates derived from petroleum fractions or synthetic sulfonates derived from the alkylation of aromatic compounds or mixtures of natural or synthetic sulfonates. Synthetic sulfonates include alkyl sulfonates and alkylaryl sulfonates. The term alkyl includes cycloalkyl groups in a side chain attached to a benzene ring. The alkyl groups can be straight or branched chain alkyl groups. The alkylaryl radical can be derived from benzene, toluene, ethyl benzene, o-,p-, or m-xylene or naphthalene.

Typically the hydrocarbon portion of the molecule is an alkyl substituted benzyl group containing at least 10 carbon atoms, more preferably at least 12 carbon atoms, and most preferably at least 14 carbon atoms.

The overbased alkaline-earth petroleum sulfonates produced by the process of this invention are used extensively in lubricant fluids as motor-oil additives, greases, and other industrial applications because of their excellent dispersing properties and their ability to neutralize engine acids. In general, the overbased sulfonates must meet stringent specifications, hence special processing methods are needed to remove all water-soluble sludge components. This invention provides, for the first time, a facile economic means for preparing overbased calcium sulfonates having a filtration rate of more than about 2 mL per minute and a titratable base number (TBN) in the range of 300 or more while maintaining a turbidity (NTU) of less than 200.

In accordance with this invention, it has been discovered, surprisingly, that a high reactivity lime can be used in the preparation of the overbased calcium sulfonates to produce a product having an NTU of < 200, a TBN of more than about 300, and a filtration rate of at least about 2 mL per minute. The reactivity or slaking rate of the lime is a particularly important feature of this invention. This reactivity can be determined by using the ASTM-C 110-67 method (Physical testing of quicklime and hydrated lime-slaking rate of quicklime), and which essentially consists in hydrating quicklime or calcium oxide and determining the temperature variation during that exothermal hydration reaction and tracing a curve of the reaction temperature relative to the reaction time. The reactivity of calcium oxide is characterized according to this method by the total reaction period, and the degree of temperature rise after 30 seconds expressed as percent of the total temperature rise. High reactivity calcium oxides are characterized, using the foregoing method, as having a total reaction period which does not exceed 10 minutes, while medium reactivity calcium oxides have a total reaction time of between 10 and 20 minutes, and low reactivity calcium oxides have a total reaction time of greater than 20 minutes. Preferably, the lime has a slaking rate of less than 8 minutes, and most preferably, less than 5.0 minutes.

In addition to slaking rate, the calcium oxide may be further characterized by assay, particle size, and surface area. Typically, the lime contains 95-98 wt.% CaO, and less than about 2 wt.% $CaCO_3$, has a number average particle size of less than about 4 microns, and a surface area of greater than about 0.6 $m^2/g$.

The amount of high reactivity lime in the reaction mass should be that amount sufficient to neutralize essentially all of the sulfonic acid reactant and provide, when reacted with sufficient carbon dioxide and water, a TBN of the overbased sulfonate product of greater than about 300. To achieve the desired TBN for the overbased product, a stoichiometric excess of lime is utilized. Preferably, the excess is less than 10 mole percent and most preferably in a range of from 3 mole percent to 6 mole percent.

Only a portion of the calcium oxide charged to the reaction vessel is hydrated. Accordingly, the partial hydration of the lime is obtained by charging to the reaction vessel at least about 35 weight percent of the amount of water required to hydrate all of the lime. Preferably the reaction vessel is charged with at least about 55% of the amount of water required to hydrate all of the lime. It is most particularly preferred to charge the reaction vessel with 65 to 75 weight percent of the amount of water required to hydrate all of the lime.

The amount of water used in the hydration of the lime is another feature of this invention. With lower reactivity limes, an increase in the degree of hydration generally results in an increase in product turbidity, i.e., an increase in NTU and/or a decrease in filtration rate. However, it has been discovered, quite unexpectedly that high reactivity limes, provide an overbased sulfonate product having low NTU and a high filtration rate even with a higher degree of lime hydration.

One measure of the quality of the overbased sulfonate is the turbidity of the product. The turbidity of the product may be determined by the use of a Hach Model 18900 Ratio Turbidimeter available from Hach Company. Turbidity is expressed in terms of Nephelometric Turbidity Units (NTU). The turbidimeter measures the ratio of light refracted at a right angle to the light transmitted through the sample. The sample is prepared by dissolving from 0.95 to 12 grams of sulfonate product in an appropriate solvent, e.g., hexane. Generally from 12 to 19 grams of solvent are used per sample. In a typical turbidimeter sample, 12 grams of sulfonate are dissolved in 12 grams of hexane and the NTU of the sample is determined. If the NTU, as measured, is greater than 200, a second sample containing 0.95 gram of sulfonate and 19 grams of hexane is prepared and the NTU of the diluted sample is determined.

In a preferred embodiment, this invention provides a process for preparing an overbased calcium sulfonate product having a filtration rate of greater than about 2 mL per minute as measured by the method described herein and a turbidity (NTU) of less than about 200, comprising: a) forming a first reaction mass by introducing solvent, methanol, high reactivity lime (calcium oxide) having a total reaction period not exceeding 10 minutes as determined by the method of ASTM-C 110-67, hard base, and water to a reaction vessel; b) introducing a $C_{10}$-$C_{30}$ alkylbenzene sulfonic acid to said reaction mass to form a second reaction mass; c) after essentially all of said sulfonic acid has been charged to said second reaction mass, reacting said second reaction mass with an amount of carbon dioxide sufficient to form said overbased calcium sulfonate product having a titratable base number (TBN) of greater than about 300 ; d) maintaining said second reaction mass during said reaction at a temperature below about 60 °C during said reaction; and e) separating said product from said second reaction mass.

In still another embodiment, this invention provides a process for preparing an overbased calcium sulfonate product having a filtration rate of greater than about 2 mL per minute as measured by the method described herein and a turbidity (NTU) of less than about 200, comprising: a) forming a first reaction mass by introducing solvent, methanol, a $C_{10}$-$C_{30}$ alkylbenzene sulfonic acid, hard base, and water to a reaction vessel; b) introducing a high reactivity lime having a total reacting period not exceeding 10 minutes as determined by the method of ASTM-C 110-67, to the first reaction mass to form a second reaction mass; c) after essentially all of said lime has charged to said second reaction mass, reacting said second reaction mass with an amount of carbon dioxide sufficient to form said overbased calcium sulfonate product having a titratable base number (TBN) of greater than about 300 ; d) maintaining said second reaction mass during said reaction at a temperature of below about 60°C; and e) separating said product from said second reaction mass.

To form the first reaction mass, a hydrocarbon solvent is used which is compatible with the alkylbenzene sulfonic acid reactant. The hydrocarbon solvent may be an aliphatic hydrocarbon, an aromatic hydrocarbon, an alkyl substituted aromatic hydrocarbon, or a mixture of any two or more of the foregoing solvents. Particularly useful is a hydrocarbon solvent or mixture of hydrocarbon solvents having a boiling point below about 70°C. Of the aliphatic hydrocarbon solvents, the more preferred are the $C_3$-$C_8$ alkanes, with normal or mixed hexanes being the most preferred. As used herein, mixed hexanes include mixtures of n-hexane, methylpentane, methylcyclopentane, and diethylbutanes among others. When normal or mixed hexanes are used as a solvent, the hexane(s) should be sufficiently pure so as to minimize the effect impurities may have on the carbonation step of the invention. It is beneficial to the process of this invention that the hexane have less than 5 wt.% impurities, preferably, less than 3 wt.% and most preferably, less than 1 wt. % impurities. Such relatively pure hexane solvents are commercially available in bulk quantities.

The aromatic hydrocarbon solvents useful with this invention may be selected from benzene, toluene, xylene, mesitylene, ethylbenzene, propylbenzene, and cumene. Preferred are o-, m-, p-xylene and mixtures thereof. Technical or commercial grades of xylene are also preferred, which grades can contain significant quantities of ethylbenzene.

In a particularly preferred embodiment, the solvent is a mixture of normal or mixed hexanes and xylene wherein the weight ratio of hexane to xylene in the mixture is in the range of from 100 : 1 to 0.1 : 1, preferably 5 : 1 (most preferably 2: 1). In forming the solvent mixture, the hexane and xylene can be added to the reaction vessel in any order.

Lower-alkyl alcohols as referred to herein include $C_1$ to $C_5$ normal and branched aliphatic alcohols or mixtures thereof. A preferred low molecular weight alcohol is a commercial grade of 99%+ purity methanol which can be used as received without treatment. The amount of alcohol added to the first reaction mass is related to the amount of lime used. Typically, the weight ratio of alcohol to lime is from 0.2 : 1 to 5 : 1, preferably from 0.3 : 1 to 3 : 1 and most preferably from 0.4 : 1 to 1.4 : 1. In the overbased sulfonate process, it is economically desirable to recover and recycle methanol. It is highly desirable to dry the methanol in the recovery process to less than about 1 wt.% water before recycling to the process reactor. Those skilled in the art are familiar with commercial techniques which may be useful for drying the methanol.

The amount of solvent and methanol used in forming the first reaction mass is desirably the minimum amount necessary to dissolve essentially all of the alkylbenzene sulfonate while providing an easily stirrable reaction mass. In addition to the above, a small amount of water and a hard base is added to the reaction vessel. By hard base is meant ammonia, ammonium carbamate, ammonium carbonate, ammonium sulfate, ammonium sulfonate, ammonium carboxylate, ammonium hydroxide, amine, or hard bases made in situ from corresponding alkali metal halide, metal acetate, metal formate, or alkaline earth formic acid. Amines which may be used are selected from primary, secondary and tertiary amines with the primary and secondary amines being the more preferred. Suitable amines are ethylamine, diethylamine, and triethylamine. A particularly preferred hard base is ammonium hydroxide which is added to the reaction vessel with the solvent and methanol. The ammonium hydroxide charged to the reaction vessel is typically 28 to 30 weight percent $NH_3$ which may be prepared from commercially available anhydrous ammonia. To provide the desired reaction condition the amount of hard base relative to lime is from 0.01 : 1 on a weight ratio basis to 1 : 1. Preferably, the weight ratio of hard base to lime is from 0.01 : 1 to 0.1 : 1 and most preferably 0.02 : 1.

After charging the reaction vessel with the reactants and solvent, the alkylbenzenesulfonic acid is charged to the reaction vessel with stirring or agitation to form a second reaction mass. The alkyl sulfonic acid should preferably have at least 10 carbon atoms in the alkyl chain. Most suitable alkaryl sulfonic acids have a number average molecular weight of greater than 250 e.g., between 300 and 2000, such as alkyl benzene and alkyl toluene sulfonic acids. Particularly preferred sulfonic acids are those prepared by sulfonating benzene or toluene that has been alkylated with $C_{14}$ or higher olefins which may be branched or straight chain or mixtures thereof. Instead of a sulfonic acid, an alkaline earth metal sulfonate can be used (for example calcium sulfonate) but sulfonic acids are preferred.

The agitation rate is critical to the process of this invention and should be at least sufficient to maintain, in suspension, the solvent, alcohol, lime, water, and ammonium hydroxide during the charging of the alkylbenzenesulfonic acid reactant. To calculate the size of agitator and agitation rate for purposes of this invention, reference is made to Hicks et al. "How to design agitators for desired process response," Chemical Engineering, April 26, 1976, pp. 22-30. Utilizing the procedures of Hicks et al. for an agitator having a pitched-blade impeller, one can determine the agitator speed (N) and pumping rate (Q) of the fluid in ft$^3$ per minute utilizing the following formulas:

$$N_{RE} = 10.7 \times D^2 \times N \times S_g/\mu$$

$$N = Q/(N_Q \times D^3)$$

$$T = 2 \times \sqrt{V/Z \times \pi}$$

and

$$= Q = \upsilon_b \times A$$

wherein ($N_{RE}$) is the impeller Reynolds number, (D) is the impeller diameter in inches, (N) is the speed of the impeller in revolutions per minute, ($S_g$) is the specific gravity of the fluid, ($\mu$) is the viscosity of the fluid in centipoise, (Q) is the pumping rate in ft$^3$ per minute, ($N_Q$) is the pumping number, (T) is the vessel diameter in inches, (V) is the volume of the vessel in gallons, (Z) is the depth of fluid in the vessel in inches, ($\upsilon_b$) is the bulk fluid velocity in feet per minute, and (A) is the horizontal cross-sectional area of the tank in ft$^2$.

In a particularly preferred embodiment, the impeller diameter to vessel diameter is greater than 0.1, more preferably greater than 0.3 and most preferably in a range of from 0.44 to 0.47. The agitation rate, expressed in terms of pumping number, is in the range of from 0.3 to 0.8 for a pitched-blade impellar. More preferably, the pumping number sufficient to form the desired sulfonate product ranges from 0.4 to 0.7 and most preferably from 0.5 to 0.65.

The alkylbenzesulfonic acid may be charged to the reaction vessel neat or in admixture with a low viscosity process oil. The process oil may be any neutral oil base stock such as 100 SN available from Exxon Company or Sun Oil Company. The neat alkylbenzene-sulfonic acid reactant typically has an assay of from 1.0 to 3.0 meq/g. It is highly desirable that the sulfonic acid, having a number average molecular weight of 500, have an assay of at least 1.5 to 2.0 meq/g.

As the alkylbenzenesulfonic acid is charged to the reaction vessel, the temperature of the reactor contents will rise due to the exothermic reaction of the alkylbenzenesulfonic acid with calcium oxide. Subsequent to the addition of substantially all of the alkylbenzenesulfonic acid and/or lime, gaseous carbon dioxide is introduced to the reaction vessel. Preferably the reaction mass is at a temperature of above 20°C, more preferably, in the range of from 30°C to reflux, and most preferably from 50° to 56°C. Generally the order of addition of reactants to the reaction vessel is not critical. However, either the lime or the sulfonic acid or both should be added just prior to the carbon dioxide addition and after essentially all of the other reactants, other than carbon dioxide, have been added.

Gaseous carbon dioxide may be added to the reaction vessel either by bubbling through the reaction mass, or by maintaining an essentially constant pressure of carbon dioxide above the liquid level in the reactor. In a particularly preferred embodiment, carbon dioxide is bubbled through the reaction mass until the desired TBN for the mixture is obtained. While the rate of carbon dioxide addition is not critical to the invention, the carbon dioxide is preferably added as quickly as possible considering the need to maintain the desired reaction mass temperature. Suitable means for cooling the reaction mass include cooling coils inserted into the reaction vessel, an external heat exchanger and circulation loop, reflux of cooled condensate, or providing the reaction vessel with a cooling jacket. Those skilled in the art can readily provide a means for maintaining the desired reaction mass temperature given any particular process equipment design.

In a particularly preferred embodiment, the solvent is a mixture of hexanes and xylene. To provide the desired reaction mass temperature, the reaction mass is cooled by recirculation of a side stream of the reaction mass through a heat exchanger so as to control the reaction mass temperature during the carbon dioxide addition step. The amount of carbon dioxide added is related to the amount of lime used and the desired TBN. Typically the amount of $CO_2$ charged to the reaction vessel will range from 5 : 1 to 0.1 : 1 carbon dioxide to lime on a weight ratio basis. Preferably the weight ratio of carbon dioxide to lime is from 2 : 1 to 0.5 : 1 and most preferably 0.8 : 1.

When substantially all of the carbon dioxide has been added, and the product has the desired TBN, the solvents are removed from the reaction mass by distillation. Typically, the reaction mass will be subjected to atmospheric distillation, followed by steam distillation, and vacuum distillation. While all three distillation techniques are desirably used, the means for removing the solvents from the reaction mass is not critical to the invention. As an alternative to distillation, the solvents may be removed by extraction techniques. Those skilled in the art are familiar with techniques which can be used to remove solvents from a reaction mass. When distillation is used, a process oil is usually added to the product mixture for control of viscosity and TBN of the final product during the atmospheric distillation step.

Subsequent to the distillation, the product is filtered or centrifuged to remove excess solids. Solids which may be removed by centrifugation or filtration include $CaCO_3$, $CaOH$, $CaO$, and impurities present in the lime charge. Another key feature of the invention is the improvement in filtration rate of the sulfonate product formed by the process of this invention. The filtration rate of the product is preferably greater than 1 mL per minute, most preferably, greater than 2 mL per minute. To determine the filtration rate of the product, the following equipment is used:

Filtration Equipment List

1. Vacuum Oven - Model 5831, National Appliance Co. or equivalent Available from Fisher Scientific Co. The oven is modified by drilling a hole in the center of the top of the oven, four inches from the front of the oven and large enough to accommodate a 1.25" (3.18 cm) diameter stainless steel pipe coupling. The coupling is welded to the oven throughout its circumference, so as to form an airtight seal when the opening in the coupling is plugged.

2. Temperature controller - such as Yellow Springs Instruments Thermistemp® Controller, Model 63RC or equivalent.

3. Temperature probe with a range of 100°C to 260°C - Yellow Springs Instruments Model 632 or equivalent.

4. Thermometer for a range of -10°C to 260°C.

5. Stirring hot plate - Pyro-Magnestir®, King Size, available from Lab-line Instruments, Inc.

6. Heating mantle for fritted disc Buchner funnel - available from Ace Glass Inc. catalog # 12056-03 or equivalent.

7. 250 Watt Infrared heat lamp - Available from Ace Glass Inc. Catalog # 12066-15 or equivalent.

8. Vacuum pump capable of obtaining 22" (74 cm) Hg vacuum - available from Curtin Matheson Scientific, catalog # 234-187 or equivalent.

9. Timer - Kwik-Set® Lab-Chron available from Lab-Line Instruments, Inc. Catalog # 1404 or equivalent.

10. Buchner funnel - 55 mm diameter, Clear glass with perforated plate, available from Curtin Matheson Scientific, catalog # 110-767 or equivalent.

11. Whatman #2 filter paper having medium-fine porosity to fit 55 mm diameter Buchner funnel, available from Fisher Scientific Co. Catalog # 09-810B.

12. Filter aid - Hi-flow Supercell, diatomaceous earth, available from Manville Products Corporation.

Overbased Sulfonate Filtration Rate Determination

In general, to determine the filtration rate of the overbased calcium sulfonate product, a mixture of 4% by weight filter-aid is added to 120 mL of crude sulfonate product. This mixture is heated to about 150° C and filtered under a vacuum of about 22" (74 cm) Hg through filter paper which has been precoated with about 2.4 grams of filter-aid. The time required to collect 120 mL of filtered sulfonate product is measured and the filtration rate is calculated as mL/min.

When setting up the equipment for the filtration rate determination, a #8 rubber stopper with a 6-mm diameter hole through the center is inserted into the stainless steel coupling on the top of the vacuum oven. The stem of a 55 mm diameter Buchner funnel is then inserted into the rubber stopper as far as it will go. A 200 mL beaker which has been calibrated and marked in increments of 20 mL is positioned inside the vacuum oven and centered under the stem of the Buchner funnel. A sample of crude sulfonate product, 200 grams, is mixed with 8 grams of filter-aid in a 400 mL beaker. The 400 mL beaker is then placed on the stirring hot plate, and a magnetic stirring bar, temperature probe, and thermometer are placed into the beaker. The 55 mm diameter filter paper is placed into the Buchner funnel and the vacuum pump on the vacuum oven is turned on. Filter-aid, 2.5 grams is then spread out evenly over the surface of the filter paper.

Once the sample in the 400 mL beaker has reached about 150° C, the temperature probe and thermometer are removed from the beaker and placed into the Buchner funnel just above the surface of the filter aid. The hot sample is then carefully poured into the Buchner funnel to within a few millimeters of the top of the funnel. The vacuum oven vacuum is adjusted to 22" (74 cm) Hg, and the timer is started when the first drop of filtered sample is collected in the calibrated 150 mL beaker. The amount of time to filter each 20 mL increment of sample is recorded and the filtration rate in mL per minute is then determined.

The practice and advantages of the invention may be further illustrated by the following illustrative examples.

Example 1

Preparation of Overbased Calcium Sulfonate

A stirred reaction vessel, (4 inches (10 cm) in diameter and having a 1.875 inch (4.763 cm) diameter pitched blade impeller) is charged with 60.0 grams xylene, 135.8 grams n-hexane, 66.0 grams methanol, 64.0 grams high reactivity lime having a slaking rate of 4 minutes, 3.9 grams of $NH_4OH$ (30 wt.% $NH_3$), 7.3 grams of water, and 135.5 grams of alkylbenzenesulfonic acid having a benzene to olefin ratio of 1.4 : The vessel contents are agitated at a speed of 1060 rpm during the reaction. The specific gravity of the reaction mass is 0.91, with an initial viscosity of 3.0 centipoise (0.003 Pas), and a final viscosity of 30 centipoise (0.03 Pas). The vessel and agitator design is selected to provide a pumping rate of 2.1 to 2.6 ft$^3$ per minute (59 to 74 l/min) with a corresponding pumping number of 0.53 to 0.64. The olefin source is a $C_{14}$-$C_{24}$ olefin, and the alkylbenzene has a number average molecular weight of 435. When the reaction mass reaches 50°C the carbon dioxide addition is begun. Carbon dioxide is added at a rate of 352 cc/min. for 55 minutes, then at a rate of 84 cc/min. for 25 minutes while maintaining the reaction mass at a temperature of 50.5 to 52.5°C. After the carbon dioxide addition is complete, the temperature of the reaction mass is raised to distill the solvent from the reaction mass at atmospheric pressure. During the first part of the distillation, 69.6 grams of process oil (100N available from Exxon Company) is charged to the reaction mass. When essentially all of the solvent has been distilled from the reaction mass, and after 45 minutes of atmospheric distillation, the reaction mass is steam distilled for 11 minutes so as to collect 22 mL of aqueous distillate followed by vacuum distillation at 28" (95 cm) Hg for 30 minutes.

Example 2

An overbased calcium sulfonate was prepared by the general procedure of Example 1. The overbased product had a TBN of 330, a haze value of 93.4 %, a viscosity of 73.4 cSt at 100°C and an NTU of 64. The haze value was determined using a Lumetron Model 402-E colorimeter manufactured by Photovolt Corporation. To determine the haze value, filtered product was diluted in 5% petroleum ether so as to obtain a total of 50 grams product plus ether, and this sample was placed in a 50 mm cell of the colorimeter. The transmittance through the sample was then determined and recorded as percent haze. The filtration rate of the product as determined by the beforementioned procedure was as follows:

| Product Filtered (mL) | Filtration Rate (mL/min) |
|---|---|
| 20 | 10.43 |
| 40 | 7.16 |
| 60 | 5.90 |
| 80 | 5.33 |
| 100 | 4.84 |
| 120 | 4.21 |

Example 3

An overbased calcium sulfonate was prepared by the general procedure of Example 1. The overbased product had a TBN of 333, a haze value of 94.7 % transmittance (diluted in 5% petroleum ether), a viscosity of 74.9 cSt at 100°C and an NTU of 69. The filtration rate of the product was as follows:

| Product Filtered (mL) | Filtration Rate (mL/min) |
|---|---|
| 20 | 12.24 |
| 40 | 8.89 |
| 60 | 6.79 |
| 80 | 5.93 |
| 100 | 5.13 |
| 120 | 4.39 |

**Claims**

1. A process for preparing an overbased calcium sulfonate product having improved filterability and a titratable base number (TBN) of greater than about 300 comprising forming, in a reaction vessel, a reaction mass comprising solvent, lower-alkyl alcohol, high reactivity lime having a total reaction period not exceeding 10 minutes as determined by the method of ASTM-C 110-67, water, hard base, and alkylbenzene sulfonic acid; carbonating said reaction mass at a temperature which is sufficient to form said overbased calcium sulfonate product having a filtration rate of more than about 2 mL per minute as measured by the method described herein; and separating from the reaction mass said overbased calcium sulfonate product having a titratable base number (TBN) greater than about 300.

2. The process of Claim 1 wherein the lime has a total reaction period of less than 5.0 minutes as determined by the method of ASTM-C 110-67 and a number average particle size of less than about 4 µm.

3. The process of Claim 1 or 2 wherein the lower-alkyl alcohol is methanol.

4. The process of any of the preceding claims wherein the solvent is a mixture of aromatic and aliphatic hydrocarbons, the alkylbenzene sulfonic acid has a number average molecular weight of at least about 500 and an alkyl group containing from 14 to 30 carbon atoms, and the reaction temperature is in the range of from 50° to 54°C.

5. The process of any of the preceding claims wherein the solvent is a mixture of hexane and xylene having a ratio of 3 : 1 hexane to xylene on a weight basis, the hard base is ammonium hydroxide, the weight ratio of alcohol to lime is from 0.4 : 1 to 1.4 : 1, the weight ratio of ammonium hydroxide to lime is 0.2 :

1, the weight ratio of carbon dioxide to lime is 0.78 : 1, and the amount of water added is sufficient to hydrate from 65 to 75 percent of the total lime added.

6. A process for preparing an overbased calcium sulfonate product having a filtration rate of greater than about 2 mL per minute as measured by the method described herein and a turbidity (NTU) of less than about 200, comprising:

a) forming a first reaction mass by introducing solvent, methanol, high reactivity lime having a total reaction period not exceeding 10 minutes as determined by the method of ASTM-C 110-67, hard base, and water to a reaction vessel;

b) introducing a $C_{10}$-$C_{30}$ alkylbenzene sulfonic acid to said first reaction mass to form a second reaction mass;

c) after essentially all of said sulfonic acid has been charged to said second reaction mass, reacting said second reaction mass with an amount of carbon dioxide sufficient to form said overbased calcium sulfonate product having a titratable base number (TBN) of greater than about 300;

d) maintaining said second reaction mass during said reaction at a temperature of below about 60°C during said reaction; and

e) separating said product from said second reaction mass.

7. A process for preparing an overbased calcium sulfonate product having a filtration rate of greater than about 2 mL per minute as measured by the method described herein and a turbidity (NTU) of less than about 200, comprising:

a) forming a first reaction mass by introducing solvent, methanol, a $C_{10}$-$C_{30}$ alkylbenzene sulfonic acid, hard base, and water to a reaction vessel;

b) introducing a high reactivity lime having a total reaction period not exceeding 10 minutes as determined by the method of ASTM-C 110-67, to the first reaction mass to form a second reaction mass;

c) after essentially all of said lime has been charged to said second reaction mass, reacting said second reaction mass with an amount of carbon dioxide sufficient to form said overbased calcium sulfonate product having a titratable base number (TBN) of greater than about 300;

d) maintaining said second reaction mass during said reaction at a temperature of below about 60°C during said reaction; and

e) separating said product from said second reaction mass.

8. The process of Claim 6 or 7 wherein the solvent is a mixture of hexane and xylene having a ratio of 3 : 1 hexane to xylene on a weight basis, the hard base is ammonium hydroxide, the weight ratio of alcohol to lime is from 0.4 : 1 to 1.4 : 1, the weight ratio of ammonium hydroxide to lime is 0.2 : 1, the weight ratio of carbon dioxide to lime is 0.78 : 1, and the amount of water added is sufficient to hydrate from 65 to 75 percent of the total lime added.

9. The process of Claim 8 further comprising agitating the first and second reaction masses at a rate sufficient to form the overbased calcium sulfonated product having improved filterability and a titratable base number of greater than about 300.

10. The process of Claim 9 wherein the agitation rate expressed in terms of agitator pumping rate is in the range of from 59 to 74 l/min (2.1 to 2.6 ft$^3$ per minute).

**Patentansprüche**

1. Verfahren zur Herstellung eines überbasischen Calciumsulfonatprodukts mit verbesserter Filtrierbarkeit und einer titrierbaren Basezahl (TBN) von mehr als 300, bei dem man in einem Reaktionsgefäß eine Reaktionsmasse bildet, die ein Lösungsmittel, einen Niedrigalkylalkohol, hoch reaktiven Kalk mit einer gemäß dem ASTM-C-110-67-Verfahren bestimmten Gesamtreaktionszeit von nicht mehr als 10 Minuten, Wasser, eine harte Base und Alkylbenzolsulfonsäure enthält, die Reaktionsmasse bei einer Temperatur carbonisiert, die ausreicht, um das überbasische Calciumsulfonatprodukt mit einer durch das hier beschriebene Verfahren gemessenen Filtrationsgeschwindigkeit von mehr als etwa 2 ml pro Minute herzustellen, und das überbasische Calciumsulfonatprodukt mit einer titrierbaren Basezahl (TBN) von mehr als 300 von der Reaktionsmasse abtrennt.

2. Verfahren nach Anspruch 1, bei dem der Kalk eine gemäß dem ASTM-C-110-67-Verfahren bestimmte Gesamtreaktionszeit von weniger als 5,0 Minuten und eine zahlengemittelte Teilchengröße von weniger als etwa 4 μm aufweist.

3. Verfahren nach Anspruch 1 oder 2, bei dem der Niedrigalkylalkohol Methanol ist.

4. Verfahren nach einem der vorstehenden Ansprüche, bei dem das Lösungsmittel eine Mischung aus aromatischen und aliphatischen Kohlenwasserstoffen ist, die Alkylbenzolsulfonsäure ein Molekulargewichts-Zahlenmittel von mindestens etwa 500 und eine Alkylgruppe mit 14 bis 30 Kohlenstoffatomen aufweist und die Reaktionstemperatur im Bereich von 50 bis 54°C liegt.

5. Verfahren nach einem der vorstehenden Ansprüche, bei dem es sich bei dem Lösungsmittel um eine Mischung aus Hexan und Xylol mit einem Gewichtsverhältnis von Hexan zu Xylol von 3 : 1 handelt, die harte Base Ammoniumhydroxid ist, das Gewichtsverhältnis von Alkohol zu Kalk 0,4 : 1 bis 1,4 : 1 beträgt, das Gewichtsverhältnis von Ammoniumhydroxid zu Kalk 0,2 : 1 beträgt, das Gewichtsverhältnis von Kohlendioxid zu Kalk 0,78 : 1 beträgt und die zugesetzte Wassermenge ausreicht, um 65 bis 75 % des gesamten zugesetzten Kalks zu hydratisieren.

6. Verfahren zur Herstellung eines überbasischen Calciumsulfonatprodukts mit einer durch das hier beschriebene Verfahren gemessenen Filtrationsgeschwindigkeit von mehr als etwa 2 ml pro Minute und einer Trübung (NTU) von weniger als etwa 200, bei dem man

   a) durch Einbringen von Lösungsmittel, Methanol, hoch reaktivem Kalk mit einer gemäß dem ASTM-C-110-67-Verfahren bestimmten Gesamtreaktionszeit von nicht mehr als 10 Minuten, einer harten Base und Wasser in ein Reaktionsgefäß eine erste Reaktionsmasse herstellt;

   b) eine $C_{10}$-$C_{30}$-Alkylbenzolsulfonsäure in die erste Reaktionsmasse einbringt, um eine zweite Reaktionsmasse herzustellen,

   c) nach Einbringen praktisch der gesamten Sulfonsäure in die zweite Reaktionsmasse diese mit einer ausreichenden Menge Kohlendioxid zur Umsetzung bringt, um das überbasische Calcium-sulfonatprodukt mit einer titrierbaren Basezahl (TBN) von mehr als etwa 300 herzustellen,

   d) die zweite Reaktionsmasse während der Reaktion auf einer Temperatur unter etwa 60°C hält und

   e) das Produkt von der zweiten Reaktionsmasse abtrennt.

7. Verfahren zur Herstellung eines überbasischen Calciumsulfonatprodukts mit einer durch das hier beschriebene Verfahren gemessenen Filtrationsgeschwindigkeit von mehr als etwa 2 ml pro Minute und einer Trübung (NTU) von weniger als etwa 200, bei dem man

   a) durch Einbringen von Lösungsmittel, Methanol, einer $C_{10}$-$C_{30}$-Alkylbenzolsulfonsäure, harter Base und Wasser in ein Reaktionsgefäß eine erste Reaktionsmasse herstellt;

   b) hoch reaktiven Kalk mit einer gemäß dem ASTM-C-110-67-Verfahren bestimmten Gesamtreaktionszeit von nicht mehr als 10 Minuten in die erste Reaktionsmasse einbringt, um eine zweite Reaktionsmasse herzustellen,

   c) nach Einbringen praktisch des gesamten Kalks in die zweite Reaktionsmasse diese mit einer ausreichenden Menge Kohlendioxid zur Umsetzung bringt, um das überbasische Calciumsulfonatprodukt mit einer titrierbaren Basezahl (TBN) von mehr als etwa 300 herzustellen,

   d) die zweite Reaktionsmasse während der Reaktion auf einer Temperatur unter etwa 60°C hält und

   e) das Produkt von der zweiten Reaktionsmasse abtrennt.

8. Verfahren nach Anspruch 6 oder 7, bei dem es sich bei dem Lösungsmittel um eine Mischung aus Hexan und Xylol mit einem Gewichtsverhältnis von Hexan zu Xylol von 3 : 1 handelt, die harte Base Ammoniumhydroxid ist, das Gewichtsverhältnis von Alkohol zu Kalk 0,4 : 1 bis 1,4 : 1 beträgt, das Gewichtsverhältnis von Ammoniumhydroxid zu Kalk 0,2 : 1 beträgt, das Gewichtsverhältnis von Kohlendioxid zu Kalk 0,78 : 1 beträgt und die zugesetzte Wassermenge ausreicht, um 65 bis 75 % des gesamten zugesetzten Kalks zu hydratisieren.

9. Verfahren nach Anspruch 8, bei dem die erste und zweite Reaktionsmasse außerdem mit ausreichender Geschwindigkeit gerührt werden, um das überbasische calciumsulfonatprodukt mit verbesserter Filtrierbarkeit und einer titrierbaren Basezahl von mehr als etwa 300 herzustellen.

10. Verfahren nach Anspruch 9, bei dem die durch die Pumpgeschwindigkeit des Rührwerks ausgedrückte Rührgeschwindigkeit im Bereich von 59 bis 74 l/min (2,1 bis 2,6 ft$^3$ pro Minute) liegt.

**Revendications**

1. Procédé pour préparer un produit de sulfonate de calcium surbasique ayant une filtrabilité améliorée et un indice de base titrable (TBN) supérieur à environ 300, comprenant le fait de former, dans un récipient réactionnel, une masse réactionnelle comprenant un solvant, un alcool alkylique inférieur, une chaux de réactivité élevée, ayant une durée de réaction totale n'excédant pas 10 minutes, telle que déterminée par la méthode de la norme ASTM-C 110-67, de l'eau, une base dure et un acide alkylbenzènesulfonique ; de carbonater cette masse réactionnelle à une température qui est suffisante pour former ce sulfonate de calcium surbasique ayant une vitesse de filtration telle que mesurée par la méthode décrite, supérieure à environ 2 ml par minute ; et de séparer de la masse réactionnelle ce produit de sulfonate de calcium surbasique ayant un indice de base titrable (TBN) supérieur à environ 300.

2. Procédé selon la revendication 1, dans lequel la chaux a une durée de réaction totale, telle que déterminée par la méthode ASTM-C 110-67 de moins de 5,0 minutes et une taille de particules moyenne en nombre inférieure à environ 4 μm.

3. Procédé selon les revendications 1 ou 2, dans lequel l'alcool alkylique inférieur est le méthanol.

4. Procédé selon l'une quelconque des revendications précédentes, dans lequel le solvant est un mélange d'hydrocarbures aromatiques et aliphatiques, l'acide alkylbenzènesulfonique a une masse moléculaire moyenne en nombre d'au moins environ 500 et un groupe alkyle contenant de 14 à 30 atomes de carbone, et la température de réaction est dans l'intervalle de 50 °C à 54 °C.

5. Procédé selon l'une quelconque des revendications précédentes, dans lequel le solvant est un mélange d'hexane et de xylène ayant un rapport de l'hexane au xylène de 3:1 sur la base des poids, la base dure est l'hydroxyde d'ammonium, le rapport pondéral de l'alcool à la chaux est de 0,4:1 à 1,4:1, le rapport pondéral de l'hydroxyde d'ammonium à la chaux est de 0,2:1, le rapport pondéral du dioxyde de carbone à la chaux est de 0,78:1 et la quantité d'eau ajoutée est suffisante pour hydrater de 65 à 75 % de la chaux totale ajoutée.

6. Procédé pour préparer un produit de sulfonate de calcium surbasique ayant une vitesse de filtration, mesurée par la méthode décrite dans le présent mémoire, supérieure à environ 2 ml par minute et une turbidité (NTU) inférieure à environ 200, comprenant :

a) le fait de former une première masse réactionnelle en introduisant un solvant, du méthanol, une chaux de réactivité élevée ayant une durée totale de réaction, telle que déterminée par la méthode ASTM-C 110-67, ne dépassant pas 10 minutes, une base dure et de l'eau dans un récipient réactionnel ;
b) le fait d'introduire un acide alkylbenzène-sulfonique en $C_{10}$-$C_{30}$ dans cette première masse réactionnelle pour former une seconde masse réactionnelle ;
c) lorsque la quasi-totalité de cet acide sulfonique a été introduite dans cette seconde masse réactionnelle, le fait de faire réagir cette seconde masse réactionnelle avec une quantité de dioxyde de carbone suffisante pour former ce produit de sulfonate de calcium surbasique ayant un indice de base titrable (TBN) supérieur à environ 300 ;
d) le fait de maintenir cette seconde masse réactionnelle à une température inférieure à environ 60 °C au cours de cette réaction ; et
e) le fait de séparer ce produit de cette seconde masse réactionnelle.

7. Procédé de préparation d'un produit de sulfonate de calcium surbasique ayant une vitesse de filtration, mesurée par la méthode décrite dans le présent mémoire, supérieure à environ 2 ml par minute et une turbidité (NTU) inférieure à environ 200, comprenant :

a) le fait de former une première masse réactionnelle en introduisant un solvant, du méthanol, un acide alkylbenzènesulfonique en $C_{10}$-$C_{30}$, une base dure et de l'eau dans un récipient réactionnel ;
b) le fait d'introduire une chaux de réactivité élevée, ayant une durée totale de réaction, telle que déterminée par la méthode ASTM-C 110-67 ne dépassant pas 10 minutes dans la première masse réactionnelle pour former une seconde masse réactionnelle ;
c) lorsque la quasi-totalité de cette chaux a été introduite dans cette seconde masse réactionnelle, le fait de faire réagir cette seconde masse réactionnelle avec une quantité de dioxyde de carbone suffisante pour former ce produit de sulfonate de calcium surbasique ayant un indice de base titrable (TBN) supérieur à environ 300 ;
d) le fait de maintenir cette seconde masse réactionnelle au cours de cette réaction à une température inférieure à 60 °C environ ; et
e) le fait de séparer ce produit de cette seconde masse réactionnelle.

8. Procédé selon les revendications 6 ou 7, dans lequel le solvant est un mélange d'hexane et de xylène ayant un rapport de l'hexane au xylène de 3:1, sur la base des poids, la base dure est de l'hydroxyde d'ammonium, le rapport pondéral de l'alcool à la chaux est de 0,4:1 à 1,4:1, le rapport pondéral de l'hydroxyde d'ammonium à la chaux est de 0,2:1, le rapport pondéral du dioxyde de carbone à la chaux est de 0,78:1, et la quantité d'eau ajoutée est suffisante pour hydrater de 65 à 75 % de la chaux totale ajoutée.

9. Procédé selon la revendication 8, comprenant en outre le fait d'agiter la première et la seconde masses réactionnelles à une vitesse suffisante pour former le produit de sulfonate de calcium surbasique ayant une filtrabilité améliorée et un indice de base titrable supérieur à environ 300.

10. Procédé selon la revendication 9, dans lequel la vitesse d'agitation, exprimée par la vitesse de pompage de l'agitateur, est dans l'intervalle de 59 à 74 litres/minute (2,1 à 2,6 ft$^3$ par minute).